# EUROPEAN PATENT SPECIFICATION

(11) **EP 3 266 924 B1**
(45) Date of publication and mention of the grant of the patent: **17.02.2021**
(21) Application number: 17179067.8
(22) Date of filing: 30.06.2017
(51) Int. Cl.: D06F 39/12

(54) **CLOTHES TREATING APPARATUS HAVING NOISE LEAKAGE PREVENTING DEVICE**
BEKLEIDUNGSBEHANDLUNGSVORRICHTUNG MIT VORRICHTUNG ZUR VERHINDERUNG VON LÄRMLECKAGEN
APPAREIL DE TRAITEMENT DES VÊTEMENTS COMPORTANT UN DISPOSITIF DE PRÉVENTION DES FUITES SONORES

(30) Priority: 06.07.2016 KR 20160085726
(43) Date of publication of application: 10.01.2018
(73) Proprietor: LG Electronics Inc., Seoul 07336 (KR)
(72) Inventor: KIM, Jinwoong, Seoul 08592 (KR); PARK, Wongi, Seoul 08592 (KR); PARK, Jinyoung, Seoul 08592 (KR); LEE, Sangwoo, Seoul 08592 (KR)
(74) Representative: Vossius & Partner Patentanwälte Rechtsanwälte mbB

(56) References cited:
- EP-A1- 2 815 688
- WO-A1-98/30831
- WO-A1-2005/049910
- DE-U1- 29 900 575
- JP-A- H01 209 098
- US-A1- 2014 230 497

## Description

### BACKGROUND OF THE INVENTION

### 1. Field of the Invention

This specification relates to a device for preventing noise generated during an operation of a clothes treating apparatus from being leaked through a lower portion of the clothes treating apparatus, and a clothes treating apparatus having the same.

### 2. Background of the Invention

A clothes treating apparatus is an apparatus for removing contaminants from laundry by putting clothes, bedding, etc. (hereinafter, referred to as laundry) into the drum. The clothes treating apparatus may perform processes such as washing, rinsing, dewatering, and drying. Such clothes treating apparatuses are classified into a top loading type and a front loading type based on a method of loading laundry into a drum. A front loading type washing machine is generally called a drum type washing machine.

The clothes treating apparatus includes a cabinet forming an outer appearance, a tub accommodated in the cabinet, a drum rotatably mounted in the tub and having laundry introduced therein, a lifter located on an inner circumferential surface of the drum to help washing the laundry by lifting and dropping the laundry, and a detergent supply device for supplying detergent into the drum.

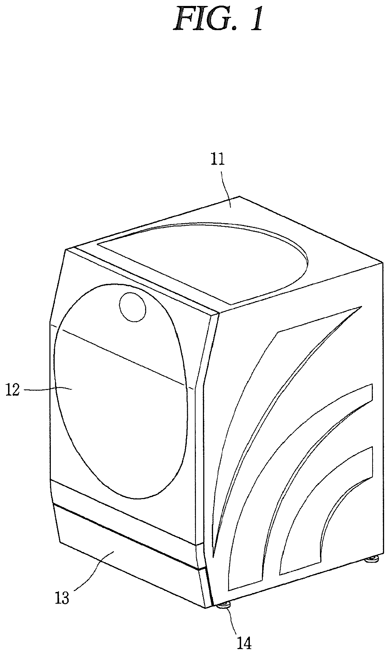

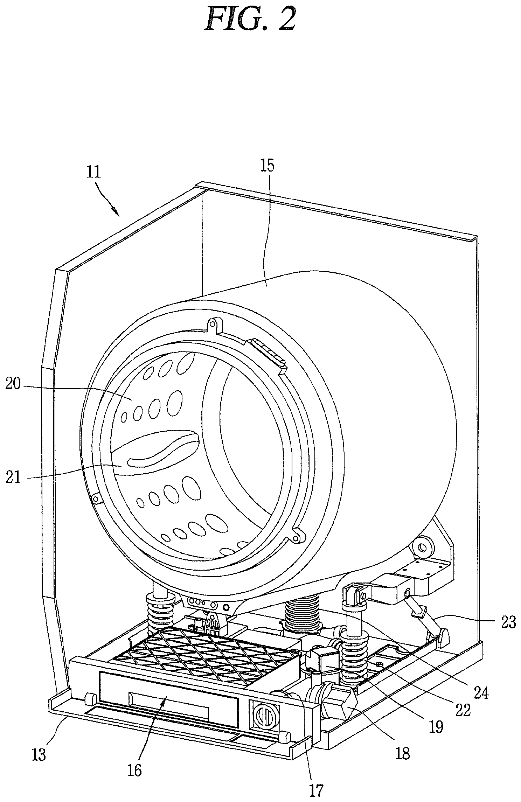

FIG. 1 illustrates a front-loading type clothes treating apparatus, and FIG. 2 illustrates an inner appearance of the clothes treating apparatus in FIG. 1.

The clothes treating apparatus includes a cabinet 11 forming an outer appearance, a drum 20 rotatably mounted in the cabinet 11 and having laundry introduced therein, a lifter 21 installed inside the drum 20, and a door 12 installed on a front surface of the cabinet 11. A detergent introduction opening cover 13 for covering a detergent introduction opening for introducing detergent is disposed on a lower portion of the cabinet 11. In addition, the clothes treating apparatus includes a duct, a heat exchanger, and the like because air needs to be circulated for drying the laundry placed in the drum 20.

Referring to FIG. 2, a base for forming a bottom surface of the cabinet 11 is located at a lower portion of the clothes treating apparatus. The base 110 serves to support the drum 20, the tub 15, a drain pump 18, a filter unit 17, and a detergent supply unit.

Generally, the clothes treating apparatus performs processes such as washing, rinsing, dewatering and drying, and in recent years, is provided with a steam generator so as to perform even a refreshing function such as removing wrinkles, odors, static electricity, etc.

Once the laundry is introduced into the clothes treating apparatus, water is supplied to perform the washing process through rotation of the drum, followed by the rinsing and dewatering processes, and then washing water is discharged to outside by a drain pump. During the operations of the clothes treating apparatus, noise and vibration are inevitably generated. The generated noise and vibration are leaked to the outside through the lower portion of the clothes treating apparatus and propagated to an installed space of the clothes treating apparatus.

Legs 14 that function to separate the clothes treating apparatus from the ground by a predetermined height are disposed on one side of the base. Accordingly, the noise and vibration generated in the clothes treating apparatus are propagated to the outside through a space between the legs 14 and a lower surface of the base 110 via the base 110.

In this case, the noise and vibration leaked through the lower portion of the clothes treating apparatus cause an uncomfortable feeling to the user, and the user should place the clothes treating apparatus in a separately closed space. This causes a problem in limiting even a space usage. Therefore, the external propagation of the noise and vibration generated during the washing process should be minimized by installing, at the lower portion of the clothes treating apparatus, a device which absorbs a part of the vibration and noise generated during the operation of the clothes treating apparatus and limits the external leakage of the vibration and noise.

DE 299 00 575 U1 discloses that a vibration-damping layer is installed below a metal plate positioned at a lower portion of a clothes treating apparatus, and that a metal plate and a rubber layer are further attached below the vibration-damping layer.

WO 98/30831 A1 discloses that as elements for preventing noise leakage, a noise barrier and a sound absorbing pad are installed at a lower portion of a washing machine.

WO 2005/049910 A1 discloses that as an element for preventing noise leakage, an insulation barrier is installed at a lower portion of a washing machine.

JP H01 209098 A discloses that a noise blocking member is attached to a waterproof fan in order to shield internal noise generated from a washing machine.

### SUMMARY OF THE INVENTION

Therefore, an aspect of the detailed description is to provide a device, capable of preventing noise, which is generated during an operation of a clothes treating apparatus, from being leaked externally through a lower portion of the clothes treating apparatus.

Another aspect of the detailed description is to provide a device which is attached to a bottom surface of a base and capable of minimizing noise leakage through the base.

Another aspect of the detailed description is to provide a device, capable of reducing external noise leakage by absorbing a part of noise which is generated during an operation of a clothes treating apparatus and transferred through a lower portion of the clothes treating apparatus.

Another aspect of the detailed description is to provide a clothes treating apparatus capable of reducing noise leakage through a lower base.

The present invention is defined by the independent claim. Preferred embodiments are disclosed in the dependent claims.

To achieve these and other advantages and in accordance with the purpose of this specification, as embodied and broadly described herein, there is provided a clothes treating apparatus comprising a noise leakage preventing device, the device comprising a base configured for being located at a lower portion of a cabinet of the clothes treating apparatus so as to form a bottom surface of the clothes treating apparatus, wherein the base is configured for fixing thereon legs which are symmetrically located at four corners of the base for supporting the cabinet; a noise blocking member arranged underneath the base extending along its periphery such that, when the noise leakage preventing device is in combination with the clothes treating apparatus, the noise blocking member is located between the base and the ground, thereby preventing noise generated during operation of the clothes treating apparatus from being transferred to outside via the base; and a noise blocking plate in a generally rectangular shape, having vertex portions recessed to be disposed around outer surfaces of the legs when the base and the noise blocking plate are combined with the clothes treating apparatus, with the legs being fixed on the base, wherein the noise blocking plate is provided with guide pins protruding from a surface thereof facing toward the base when the base and the noise blocking plate are combined with each other, and wherein the base is provided with guide pin accommodating portions into which the respective guide pins can be inserted, such that the noise blocking plate can be coupled to the base.

According to one embodiment disclosed herein, the noise blocking member may be compressed by a load of the cabinet applied toward the ground.

According to one embodiment disclosed herein, the noise blocking member may have a thickness greater than a distance between the base and the ground.

According to one embodiment disclosed herein, the noise blocking member may be arranged to be in contact with the outer surfaces of the legs fixed on the base.

According to one embodiment disclosed herein, the noise blocking member may be formed by stacking two different materials.

According to one embodiment disclosed herein, the noise blocking member may include a first member made of a material compressed by a load, and a second member attached to the first member, and made of a material having density greater than that of the first member to prevent an external leakage of the noise.

According to one embodiment disclosed herein, the first member and the second member may have different thicknesses from each other.

According to one embodiment disclosed herein, the noise blocking plate may be provided with attachment pads provided on edges thereof, respectively, and having adhesive strength such that the noise blocking plate is attached to the base.

According to one embodiment disclosed herein, the noise blocking plate may be provided with screw coupling portions formed on a plurality of points, such that the noise blocking plate is fixed to the base by screws.

According to one embodiment disclosed herein, the noise blocking plate may be provided with a drain hole formed through a central portion thereof, so that a liquid discharged through the base flows externally.

According to one embodiment disclosed herein, the noise blocking plate may be provided with grooves formed on an upper surface thereof and extending toward a drain hole, so that a liquid discharged through the base flows toward the drain hole.

According to one embodiment disclosed herein, the noise blocking plate is provided at an inside thereof with a plurality of ribs extending in parallel along one direction for reinforcing rigidity of the noise blocking plate.

According to the present invention having the configuration, a space formed between the lower surface of the base and the ground can be blocked, thereby preventing external leakage of the noise generated in the clothes treating apparatus.

Also, according to the present invention having the configuration, the noise blocking member located along the periphery of the lower surface of the base can hermetically seal the space between the base and the legs, thereby reducing noise leaked through the base.

Also, according to the present invention having the configuration, the noise blocking panel which is made of a material capable of absorbing noise can be attached on the base, so as to absorb a part of the noise generated in the clothes treating apparatus, thereby reducing external leakage of the noise.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a perspective view illustrating an outer appearance of a clothes treating apparatus;
FIG. 2 is a perspective view illustrating an inner structure of the clothes treating apparatus of FIG. 1;
FIG. 3 is a perspective view illustrating a clothes treating apparatus including a noise leakage preventing device;
FIG. 4 is a lateral view illustrating a state that a noise blocking member is coupled to a clothes treating apparatus;
FIG. 5 is a perspective view illustrating an outer appearance and an inner structure of a noise blocking member;
FIG. 6 is a bottom view of a clothes treating apparatus including a noise blocking member in accordance with one embodiment of the present invention;
FIG. 7 is a view illustrating another embodiment different from that of FIG. 6, namely, a bottom view of a clothes treating apparatus including a noise blocking member having a different shape from that of FIG. 6;
FIG. 8 is a bottom view illustrating another embodiment according to the present invention;
FIG. 9 is a lateral view of a clothes treating apparatus including a noise blocking member and a noise blocking panel;
FIG. 10 is a view illustrating a state that a noise blocking member and a noise blocking panel are coupled to a bottom surface of a base;
FIG. 11 is a view illustrating another embodiment different from that of FIG. 10;
FIG. 12 is a view illustrating another embodiment different from that of FIG. 11;
FIG. 13 is a perspective view illustrating a noise blocking panel;
FIG. 14 is a lateral view of a noise blocking panel;
FIG. 15A is a planar view illustrating an upper surface of a noise blocking panel;

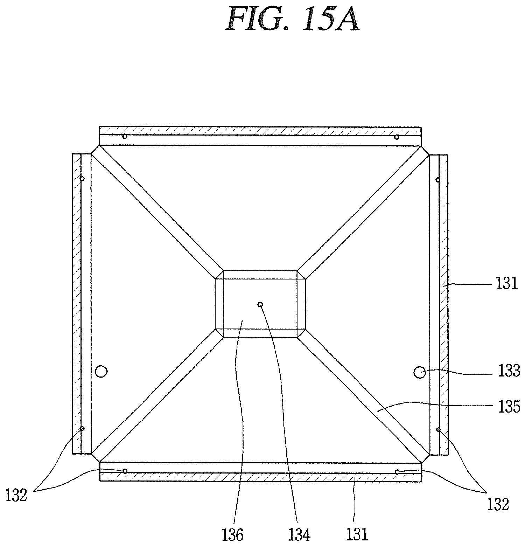

FIG. 15A is a bottom view illustrating a lower portion of a noise blocking panel; and

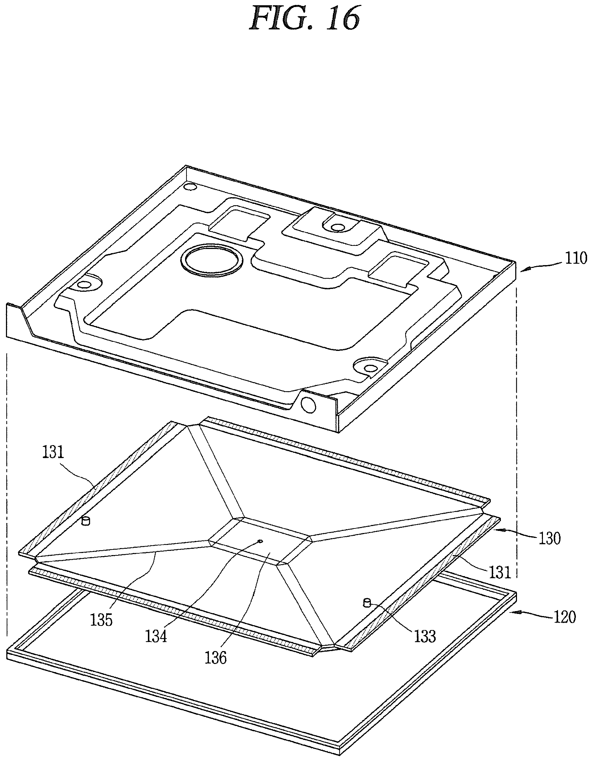

FIG. 16 is a conceptual view illustrating a state that a noise leakage preventing device is coupled to a base.

### DETAILED DESCRIPTION OF THE INVENTION

Description will now be given in detail of a noise leakage preventing device according to exemplary embodiments disclosed herein, with reference to the accompanying drawings. For the sake of brief description with reference to the drawings, the same or equivalent components may be provided with the same or similar reference numbers, and description thereof will not be repeated. A singular representation may include a plural representation unless it represents a definitely different meaning from the context.

FIG. 1 is a view illustrating an outer appearance of a clothes treating apparatus, and FIG. 2 is a view illustrating an inner structure of the clothes treating apparatus.

A clothes treating apparatus according to the present invention includes a cabinet 11 defining an outer appearance, a drum 20 rotatably mounted in the cabinet 11 and accommodating laundry therein, a lifter 21 installed inside the drum 20, and a door 12 installed on a front surface of the cabinet 11. Further, a detergent introduction opening cover 13 for covering a detergent introduction opening for introducing detergent is disposed at a lower portion of the cabinet 11. The clothes treating apparatus further includes a duct (not illustrated), a heat exchanger (not illustrated), and the like because air needs to be circulated for drying the laundry accommodated in the drum 20.

The clothes treating apparatus may include, in the lower portion thereof, a storage container 16 in which liquid detergent or liquid softener is stored and which can be drawn out of the cabinet 11, a plurality of elastic members 22 and/or dampers 23 for supporting the drum 20 to suppress vibration, and a driving motor (not illustrated) for rotating the drum 20. The door 12 through which laundry to be washed is taken in and out may be provided on a front surface of the cabinet 11. The door 12 may be configured to open and close the front surface of the drum 20. The door 12 may have a disk shape. An electric heater for heating water when power is applied may be provided below the drum 20.

A drain pump 18 for draining water stored in the drum 20 may be provided below the drum 20. A circulation pump 19 by which the water in the drum 20 is pumped up to be introduced into an upper area of the drum 20 may be provided below the drum 20. A filter unit 17 for collecting foreign materials contained in the water discharged out of the drum 20 may be provided at one side of the drain pump 18.

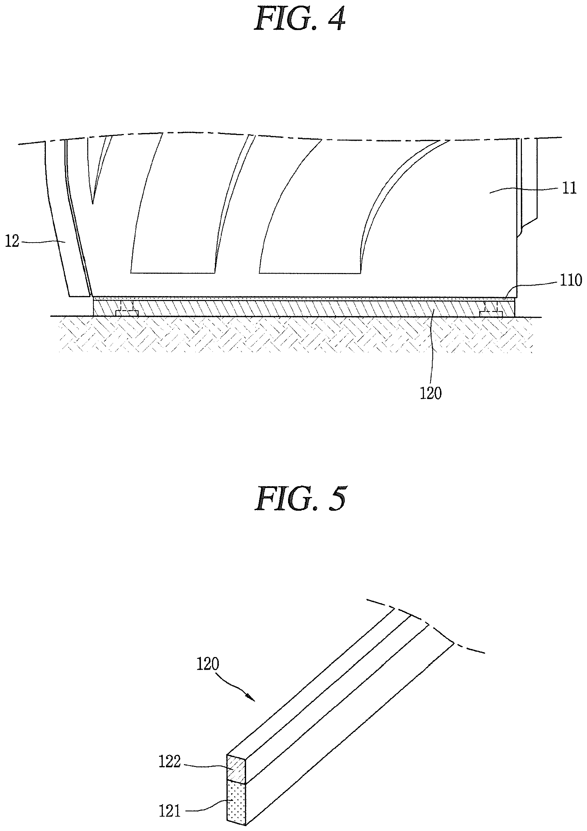

A base 110 (see FIG. 4) is positioned at a lower portion of the clothes treating apparatus. The filter unit 17, the drain pump 18, the circulation pump 19, the elastic members 22 for supporting the drum 20, and the like are disposed on an upper portion of the base 110. The base 110 forms a bottom surface of the clothes treating apparatus.

The base 110 is provided with a plurality of legs 14 by which the clothes treating apparatus is spaced apart from the ground by a predetermined height. The legs 14 serve to support the clothes treating apparatus. Noise and vibration generated during an operation of the clothes treating apparatus are transferred to outside through a space between the legs 14 and a lower surface of the base 110 via the lower base 110.

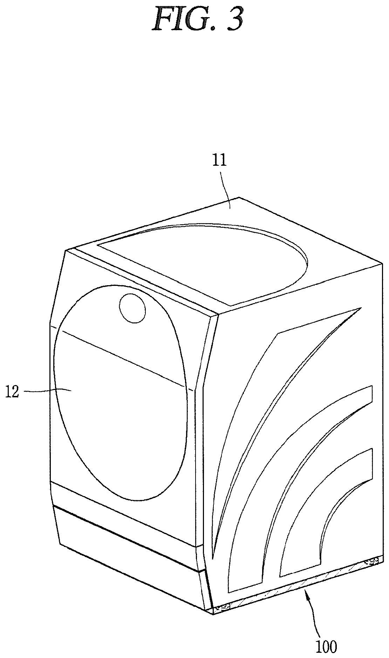

FIG. 3 illustrates the clothes treating apparatus with a noise leakage preventing device 100 coupled to a lower portion of the base 110.

In general, noise and vibration which are generated within the clothes treating apparatus during an operation of the clothes treating apparatus are leaked to outside through the lower base 110. Thus, the noise leakage preventing device 100 hermetically seals the space between the ground and the legs 14 to prevent noise from being leaked to the outside. The noise leakage preventing device 100 of the clothes treating apparatus may be configured such that a noise blocking member 120 and/or a noise blocking panel 130 are coupled to the base 110.

FIG. 4 illustrates a state where the noise leakage preventing device 100 including the noise blocking member 120 is coupled to the clothes treating apparatus.

The noise leakage preventing apparatus 100 may be constructed such that the noise blocking member 120 is coupled along a lower periphery of the base 110. The base 110 is attached to a lower portion of the cabinet 11 to form a bottom surface of the clothes treating apparatus. The components constituting the clothes treating apparatus are coupled to an upper surface of the base 110.

The base 110 may be made of a metallic material. A plurality of through holes (not illustrated) through which noise is discharged or a plurality of coupling holes (not illustrated) through which screws are inserted may be formed through the surface of the base 110. Accordingly, noise generated within the clothes treating apparatus may be leaked externally through the through holes or the coupling holes.

Accordingly, the generated noise and vibration may partially be absorbed by coupling the noise blocking member 120 along a periphery of the lower surface of the base 110, and the space between the lower surface of the base 110 and the legs 14, which is generated as the legs 12 support the clothes treating apparatus, may be hermetically sealed. Since the clothes treating apparatus is formed in a rectangular shape, the base 110 may also preferably be formed in a rectangular shape.

A flat portion on which the noise blocking member 120 can be located may preferably be disposed along the periphery of the lower surface of the base 110, so as to facilitate the noise blocking member 120 to be coupled along the periphery of the lower surface of the base 110.

The noise blocking member 120 is attached along the periphery of the lower surface of the base 110, and has a shape extending in one direction. Also, the noise blocking member 120 may be located between the base 110 and the ground so as to be compressed by a load of the clothes treating apparatus applied toward the ground.

The clothes treating apparatus is spaced apart from the ground by the legs 14 with a predetermined height. Since the noise blocking member 120 is attached along the periphery of the lower surface of the base 110 to be located between the base 110 and the ground, noise and vibration generated during the operation of the clothes treating apparatus can be prevented from being leaked externally through the lower surface of the base 110.

FIG. 5 is a view illustrating an outer appearance and an inner structure of the noise blocking member 120.

The noise blocking member 120 may be located between the base 110 disposed at the lower portion of the clothes treating apparatus and the ground and compressed by a load of the clothes treating apparatus applied toward the ground.

The noise blocking member 120 may extend in one direction and may be compressed by the load of the clothes treating apparatus. Therefore, the noise blocking member 120 may preferably have a thickness larger than a distance between the base 110 and the ground. The noise blocking member 120 may be formed by combining two different materials.

The noise blocking member 120 may generally be made of synthetic resin to have predetermined elasticity and sound (noise) absorption and insulation properties, but may be made of rubber or sponge. The noise blocking member may be formed in such a manner that a first member 121 made of a soft material and a second member 122 made of a harder material than the first member 121 are stacked with each other.

The first member 121 may be made of a material which is compressible by a load. The first member 121 may be compressed by the load of the clothes treating apparatus between the lower portion of the clothes treating apparatus and the ground. Density of the first member 121 is increased when the first member 121 is compressed by the load. This may result in effectively preventing the noise generated in the clothes treating apparatus from being leaked to outside.

The second member 122 is made of a material different from that of the first member 121. The second member 122 may be made of a material, which is hard for shielding noise and has high density for effectively preventing the noise leakage to the outside.

FIG. 5 illustrates one exemplary structure of the noise blocking member. The noise blocking member 120 may be configured such that the first member 121 is located higher than the second member 122 or vice versa. The first member 121 and the second member 122 may be formed to have different thicknesses from each other. Since the first member 121 is made of a material that is compressible by the load of the clothes treating apparatus, the first member 121 may preferably be thicker than the second member 122.

The noise blocking member 120 should have a thickness greater than the spaced height between the clothes treating apparatus and the ground. Therefore, the sum of thicknesses of the first member 121 and the second member 122 may preferably be greater than the spaced distance between the base 110 of the clothes treating apparatus and the ground.

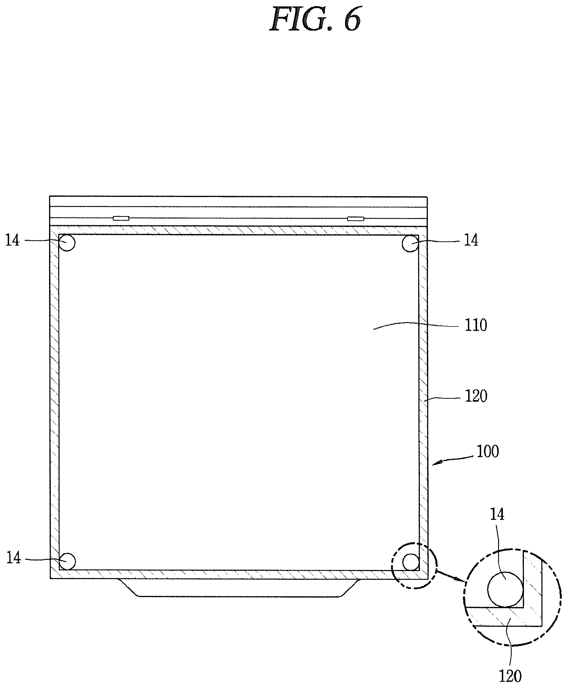

FIG. 6 illustrates one embodiment of the present invention, namely, illustrates the lower surface of the clothes treating apparatus with the noise blocking member 120 installed thereon.

Since the legs 14 generally have a rounded shape, the legs 14 each having a rounded shape will be exemplarily described below.

The legs 14 for supporting the clothes treating apparatus are symmetrically located at four corners of the base 110. The noise blocking member 120, as illustrated in FIG. 6, is attached along the periphery of the base 110 at the outside of the legs 14.

The noise blocking member 120 is attached along the periphery of the rectangular base 110 and thus may not surround the legs 14. The noise blocking member 120, as illustrated in FIG. 6, may be integrally formed so as to block noise leaked to the outside through the lower portion of the base 110.

The structure of the noise blocking member 120 is the same as that illustrated in FIG. 5.

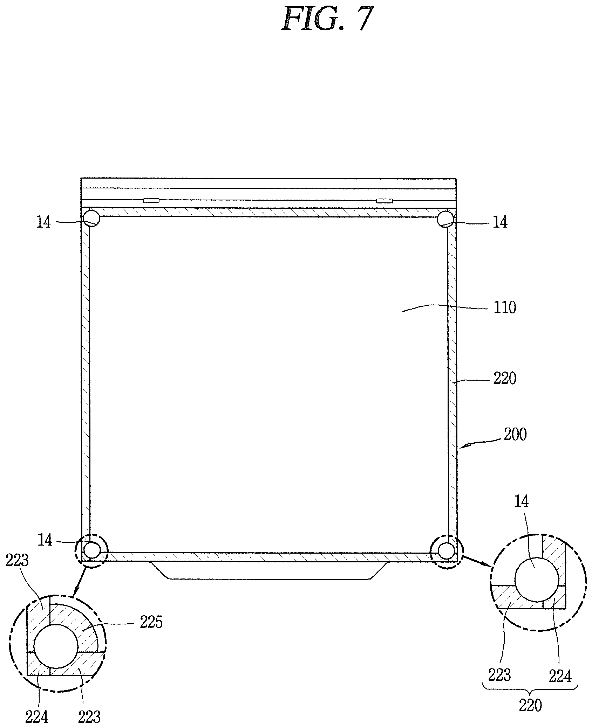

FIG. 7 illustrates another embodiment of the present invention, namely, illustrates the lower surface of the clothes treating apparatus on which a noise blocking member 220 having a shape different from that of FIG. 6 is provided.

The noise blocking member 220 is attached along the periphery of the base 110 and located at edges of the base 110. The noise blocking member 220 is located outside the legs 14. Thus, the noise blocking member 220 may further include corner portions formed to surround circumferences of the legs 14, so as to minimize gaps between the legs 14 and the noise blocking member.

As illustrated in FIG. 7, the noise blocking member 220 may include linear members 223 each extending along one direction and attached to each edge of the base 110, and corner members 225 each having a curved inner surface for surrounding the legs 14 and attached to each vertex portion of the base 110.

The linear members 223 are located along the periphery of the base 110 to prevent noise from being leaked out from the lower portion of the base 110. Also, the corner members 224 surround the legs 14 from the outside of the legs 14 so as to block even gaps between the linear members 223 and the legs 14, thereby more effectively preventing the noise leakage to the outside through the lower portion of the base 110. The noise blocking member 220, as illustrated in a lower left drawing of FIG. 7, may further include corner members 225 surrounding the legs 14 at the inside of the legs, respectively,. This may allow for preventing the external leakage of the noise more effectively. The structure of the noise blocking member 220 is the same as that of FIG. 5.

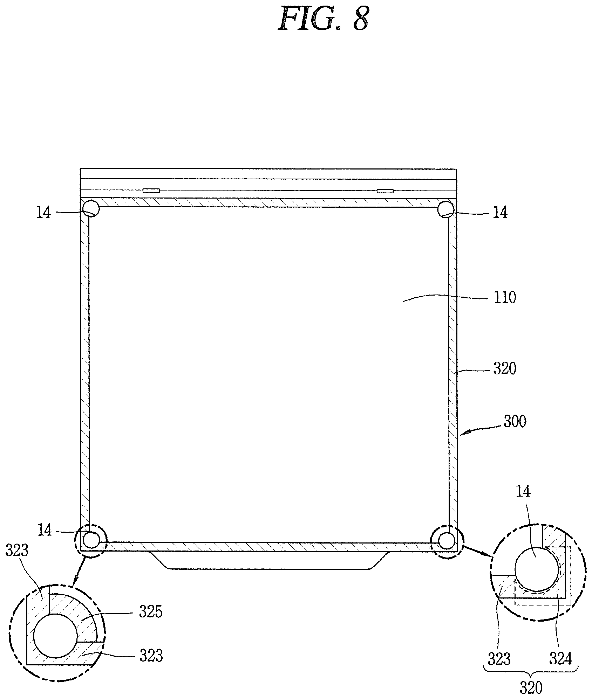

FIG. 8 illustrates another embodiment of the present invention. A noise blocking member 320, as illustrated in FIG. 8, may include linear portions 323 attached along the periphery of the base 110, and bent portions 324 surrounding the legs 14 at the outside of the legs 14. The linear portions 323 and the bent portions 324 may integrally formed all together. As the noise blocking member 320 is constituted by the linear portions 323 and the bent portions 324 integrally formed with each other, noise leaked through surroundings of the legs 14 can be more effectively prevented. The noise blocking member 320, as illustrated in a lower left drawing of FIG. 8, may further include bent portions 325 surrounding the legs 14 at the inside of the legs, respectively, thereby preventing the external leakage of the noise more effectively. The structure of the noise blocking member 320 is the same as that of FIG. 5.

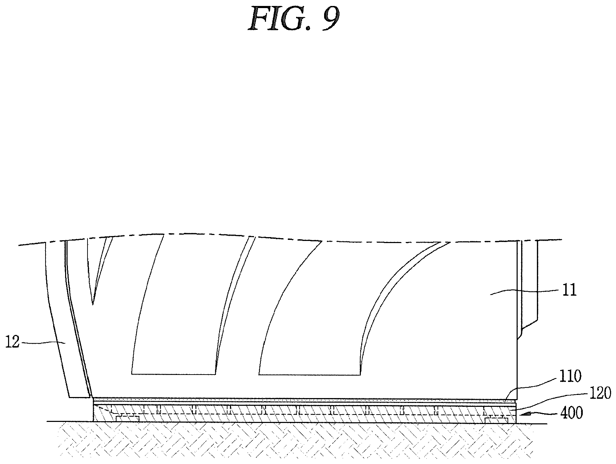

FIG. 9 illustrates a clothes treating apparatus in which a noise leakage preventing device provided with the noise blocking member 120, 220, 320 and a noise blocking panel 130 is installed.

The noise leakage preventing device may include the noise blocking member 120, 220, 320 and a noise blocking panel 130. A noise blocking member may be attached along the periphery of the lower surface of the base 110 and the noise blocking panel 130 may be attached to the lower surface of the base 110 at an inside of the noise blocking member.

As illustrated in FIG. 9, since the noise blocking member is located between the base 110 and the ground, the noise blocking member may have a shape of blocking the lower portion of the clothes treating apparatus to prevent an external exposure of the lower portion of the clothes treating apparatus. The noise blocking panel 130 is attached to the lower surface of the base 110 at the inside of the noise blocking member. The noise blocking panel 130 may be attached to the lower surface of the base 110 to prevent noise leaked from the lower portion of the base 110.

The noise blocking member, as aforementioned, may be attached along the periphery of the base 110 at the outside of the legs 14. In addition, the noise blocking member may have the structure in which two materials are stacked as illustrated in FIG. 5, and have the shape illustrated in FIGS. 6 to 7.

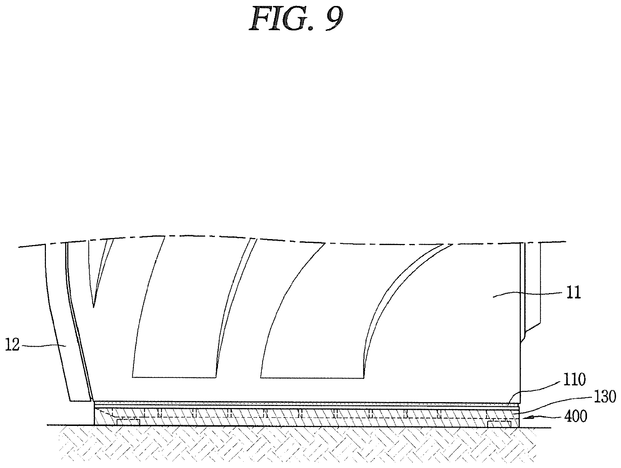

FIGS. 10 to 12 illustrate the lower portion of the clothes treating apparatus, namely, illustrates that the noise leakage preventing device provided with the noise blocking member 120, 220, and 320 and the noise blocking panel 130 is installed. As described above, the noise blocking member and the noise blocking panel 130 serve to absorb a part of the noise which is generated in the clothes treating apparatus and leaked from the lower portion of the clothes treating apparatus, and prevent external leakage of the noise.

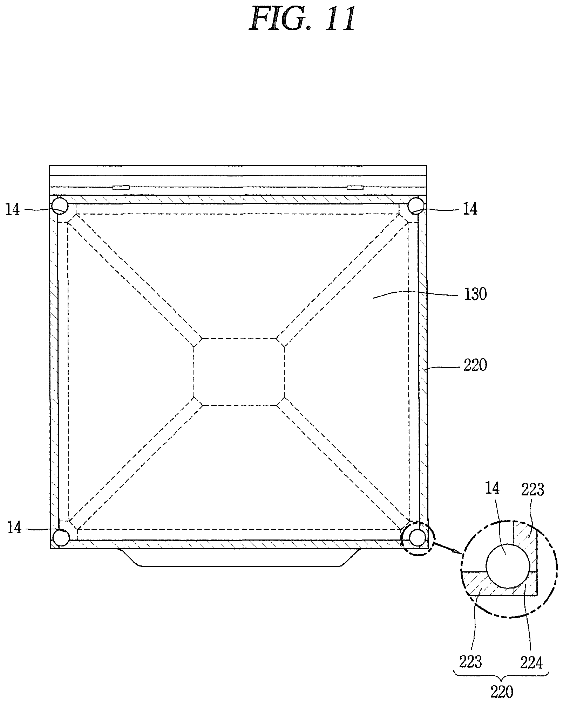

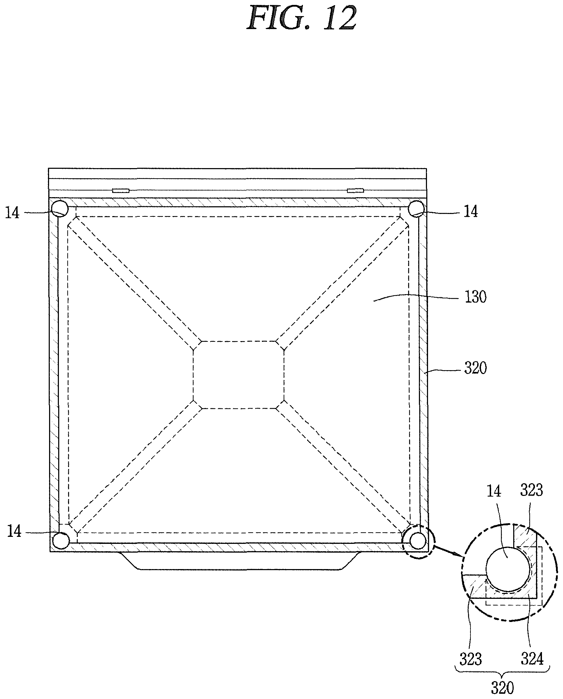

FIG. 10 illustrates that the noise blocking member 120 having the shape as illustrated in FIG. 6 and the noise blocking panel 130 are coupled to the lower surface of the base 110. FIG. 11 illustrates that the noise blocking member 220 having the shape as illustrated in FIG. 7 and the noise blocking panel 130 are attached to the lower surface of the base 110. FIG. 12 illustrates that the noise blocking member 320 having the shape as illustrated in FIG. 8 and the noise blocking panel 130 are attached to the lower surface of the base 110. The description of the noise blocking member is the same as the foregoing description.

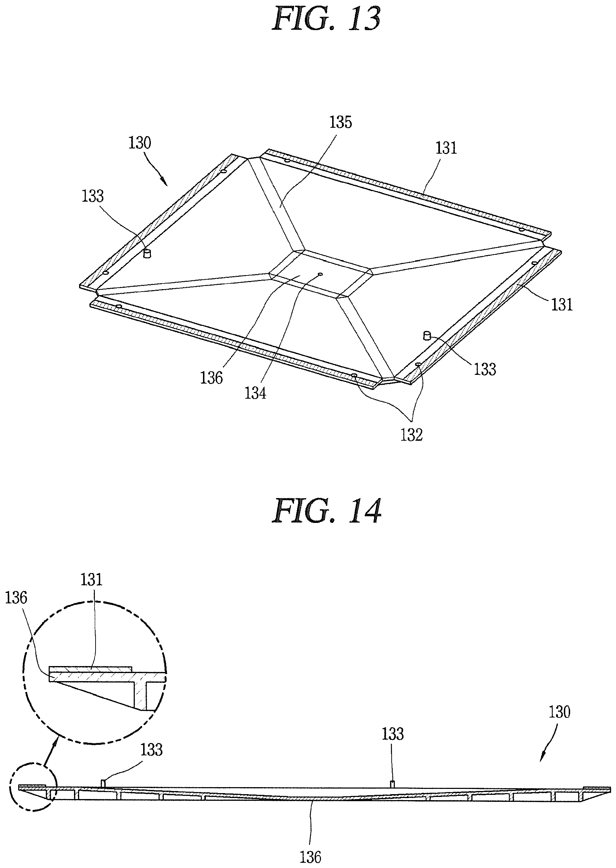

FIGS. 13 to 15 illustrate the noise blocking panel 130.

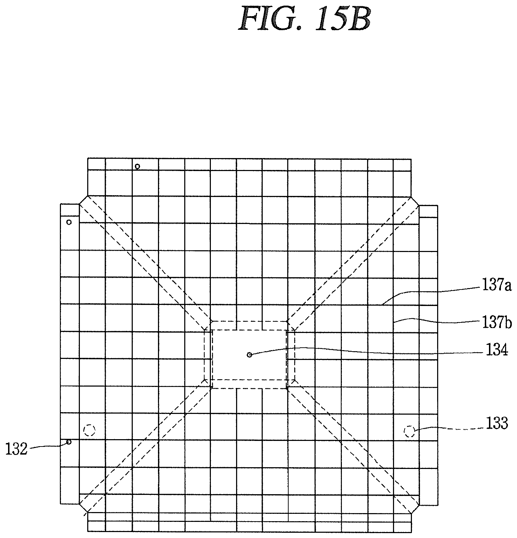

FIG. 13 is a perspective view illustrating the noise blocking panel 130, FIG. 14 is a lateral view of the noise blocking panel 130, and FIGS. 15A and 15B are a planar view and a bottom view of the noise blocking panel 130, viewed from the top.

The noise blocking panel 130 is formed in a shape of a rectangular plate and each vertex portion thereof may be bent toward a central portion thereof so as to surround the inner surfaces of the legs 14 located on the base 110.

A drain hole 134 for drainage may be formed through an upper surface of the noise blocking panel 130 (a surface attached to the lower surface of the base 110 is referred to as the upper surface), namely, through the central portion of the upper surface of the noise blocking panel 130, such that a liquid can be externally discharged without being collected at the central portion of the upper surface of the noise blocking panel 130 when the liquid is discharged from the lower portion of the base 110.

Grooves 135 along which the liquid discharged from the base 110 flows toward the drain hole 134 may be formed on the upper surface of the noise blocking panel 130 toward the drain hole 134. Also, the grooves 135 may form a drain portion 136 with a height lower than surrounding portions thereof, such that the liquid can be collected toward the drain hole 134 along the grooves 135.

Screw coupling portions 132 may be formed through portions adjacent to each vertex of the noise blocking panel 130 in a spacing manner, such that the noise blocking plate 130 can be attached to the lower surface of the base 110 using screws. That is, the screw coupling portions 132 may be located at a plurality of points along the surface of the noise blocking panel 130.

Attachment pads 131 that are closely attached to the lower surface of the base 110 may be provided on each edge of the noise blocking panel 130. Each of the attachment pads 131 which has adhesive strength may be attached to the lower surface of the base 110 made of the metal, thereby preventing the noise generated during the operation of the clothes treating apparatus from be leaked to the outside through the edges and simultaneously preventing the noise blocking panel 130 from being separated from the base 110 due to generated vibration. The attachment pad 131 may be formed along an outer side of each edge.

Guide pins 133 may be formed on the upper surface of the noise blocking panel 130 so that the noise blocking panel 130 can be closely attached to the lower surface of the base 110 without any error. The guide pins 133 may be inserted into guide pin accommodating portions formed on the base 110. Each of the guide pins 133 has a shape protruding from the upper surface of the noise blocking panel 130. The guide pin 133 may be provided in plurality on one side of the upper surface of the noise blocking panel 130.

The noise blocking panel 130 may be provided with a plurality of ribs 137a extending along one direction in parallel for reinforcing rigidity of the noise blocking panel 130. The ribs 137a are located inside the noise blocking panel 130 to increase the rigidity of the noise blocking panel 130.

The ribs 137a for reinforcing the rigidity may be made of a material different from that of the noise blocking panel 130 and serve to prevent the noise blocking panel 130 from being damaged due to vibration generated during the operation of the clothes treating apparatus.

FIG. 15B illustrates the shape of the ribs 137a externally exposed from a lower surface of the noise blocking panel 130. The plurality of ribs 137a may be arranged inside the noise blocking panel 130 to be in parallel with predetermined intervals. A plurality of another ribs 137b which are arranged in an intersecting direction with the plurality of ribs 137a may also be arranged to be in parallel with predetermined intervals.

The noise blocking panel 130 may be made of a plastic material such as polypropylene. By using the plastic material, the noise blocking panel 130 can absorb the noise and vibration generated within the clothes treating apparatus, thereby reducing the external leakage of the noise and vibration.

FIG. 16 illustrates that the noise leakage preventing device is coupled to the base 110 of the clothes treating apparatus.

The base 110 forms the bottom surface of the clothes treating apparatus, and is provided with the noise blocking member coupled thereto along the periphery of the base 110. The noise blocking panel 130 is located inside the noise blocking member attached to the periphery of the lower surface of the base 110.

That is, the noise blocking member is located on the outer side (periphery) of the lower surface of the base 110, and the noise blocking panel 130 is attached to the lower surface of the base 110 at the inside of the noise blocking plate. The noise blocking member and the noise blocking panel 130 are arranged side by side on the basis of the lower surface of the base 110.

So far, the noise leakage preventing device of the clothes treating apparatus has been described. Hereinafter, the clothes treating apparatus including the thusly-configured noise leakage preventing device will be described.

The clothes treating apparatus may include a cabinet 11, a tub 15 provided within the cabinet 11, a drum 20 rotatably provided within the tub 15 and accommodating laundry or things to be dried therein, a base 110 located at a lower portion of the cabinet 11 and forming a bottom surface of the clothes treating apparatus, a noise blocking member extending in one direction and attached along a periphery of a lower surface of the base 110 to be located between the base 110 and the ground, and a noise blocking panel 130 formed in a shape of a rectangular plate and having vertex portions bent toward a central portion thereof to surround inner surfaces of legs 14. With the configuration, the clothes treating apparatus can have the characteristic of preventing noise generated during a washing process from being externally leaked through a lower portion of the clothes treating apparatus via the base 110.

The noise leakage preventing device of the clothes treating apparatus and the clothes treating apparatus including the noise leakage preventing device may not be limited to the configurations and the methods of the foregoing embodiments described above, and all or part of the embodiments may selectively be combined to make various changes.

## Claims

1. A clothes treating apparatus comprising a noise leakage preventing device, the device comprising:
a base (110) configured for being located at a lower portion of a cabinet (11) of the clothes treating apparatus so as to form a bottom surface of the clothes treating apparatus, wherein the base (110) is configured for fixing thereon legs (14) which are symmetrically located at four corners of the base (110) for supporting the cabinet (11); and
a noise blocking member (120, 220, 320) arranged underneath the base (110) extending along its periphery such that, when the noise leakage preventing device is in combination with the clothes treating apparatus, the noise blocking member (120, 220, 320) is located between the base (110) and the ground, thereby preventing noise generated during operation of the clothes treating apparatus from being transferred to outside via the base (110); **characterized in that** the device further comprises
a noise blocking plate (130) in a generally rectangular shape, having vertex portions recessed to be disposed around outer surfaces of the legs (14) when the base (110) and the noise blocking plate (13) are combined with the clothes treating apparatus, with the legs (14) being fixed on the base (110),
wherein the noise blocking plate (130) is provided with guide pins (133) protruding from a surface thereof facing toward the base (110) when the base (110) and the noise blocking plate (130) are combined with each other, and
wherein the base (110) is provided with guide pin accommodating portions into which the respective guide pins (133) can be inserted, such that the noise blocking plate (130) can be coupled to the base (110).

2. The apparatus of claim 1, wherein the noise blocking member (120, 220, 320) is arranged such that, when the device is in combination with the clothes treating apparatus, it is compressed by the load of the cabinet on the ground.

3. The apparatus of claim 1 or 2, wherein the noise blocking member (120, 220, 320) has a thickness greater than a distance between the base (110) and the ground when the device is in combination with the clothes treating apparatus.

4. The apparatus of any one of claims 1 to 3, wherein the noise blocking member (120, 220, 320) is arranged to be in contact with the outer surfaces of the legs (14) fixed on the base (110).

5. The apparatus of any of preceding claims, wherein the noise blocking member (120, 220, 320) comprises two members (121, 122) of different materials stacked on each other.

6. The apparatus of claim 5, wherein the two members (121, 122) of different materials include:
a first member (121) made of a material compressible by the load of the cabinet; and
a second member (122) attached to the first member (121), being made of a material having density greater than that of the first member (121) for preventing leakage of noise.

7. The apparatus of claim 5 or 6, wherein the first member (121) and the second member (122) have different thicknesses from each other.

8. The apparatus of any of claims 1 to 7, wherein the noise blocking plate (130) is provided with attachment pads (131) provided on edges thereof, the attachment pads (131) having adhesive strength for having the noise blocking plate (130) attached to the base (110).

9. The apparatus of any of claims 1 to 8, wherein the noise blocking plate (130) is provided with a plurality of screw coupling portions (132) formed thereon, such that the noise blocking plate (130) can be fixed to the base (110) by screws.

10. The apparatus of any of claims 1 to 9, wherein the noise blocking plate (130) is provided with a drain hole (134) formed through a central portion thereof, for allowing liquid discharged through the base (110) to flow outside.

11. The apparatus of claim 10, wherein the noise blocking plate (130) is provided with grooves (135) formed on said surface thereof for facing the base (110), the grooves (135) extending toward the drain hole (134) so that liquid discharged through the base (110) flows toward the drain hole (134).

12. The apparatus of any of claims 1 to 11, wherein the noise blocking plate (130) is provided with a plurality of ribs (137a) for reinforcing rigidity of the noise blocking plate (130).

## Patentansprüche

1. Bekleidungsbehandlungsvorrichtung mit einer Vorrichtung zur Verhinderung eines Geräuschaustritts, wobei die Vorrichtung aufweist:
eine Basis (110), die konfiguriert ist, an einem unteren Abschnitt eines Gehäuses (11) der Bekleidungsbehandlungsvorrichtung angeordnet zu werden, um eine Bodenfläche der Bekleidungsbehandlungsvorrichtung zu bilden, wobei die Basis (110) konfiguriert ist, daran Füße (14) zu befestigen, die zum Stützen des Gehäuses (11) an vier Ecken der Basis (110) symmetrisch angeordnet sind; und
ein unter der Basis (110) angeordnetes Geräuschsperrelement (120, 220, 320), das sich längs deren Umfang erstreckt, so dass, wenn die Vorrichtung zur Verhinderung eines Geräuschaustritts mit der Bekleidungsbehandlungsvorrichtung kombiniert ist, das Geräuschsperrelement (120, 220, 320) zwischen der Basis (110) und dem Boden angeordnet ist, wodurch verhindert wird, dass während des Betriebs der Bekleidungsbehandlungsvorrichtung erzeugte Geräusche über die Basis (110) nach außen übertragen werden;
**dadurch gekennzeichnet, dass** die Vorrichtung ferner eine Geräuschsperrplatte (130) in einer im Wesentlichen rechteckigen Form mit Scheitelabschnitten aufweist, die ausgespart sind, so dass sie um die Außenflächen der Füße (14) angeordnet sind, wenn die Basis (110) und die Geräuschsperrplatte (13) mit der Bekleidungsbehandlungsvorrichtung kombiniert sind, wobei die Füße (14) an der Basis (110) befestigt sind,
wobei die Geräuschsperrplatte (130) mit Führungsstiften (133) versehen ist, die aus deren zur Basis (110) weisenden Oberfläche vorstehen, wenn die Basis (110) und die Geräuschsperrplatte (130) miteinander kombiniert sind, und
wobei die Basis (110) mit Führungsstift-Aufnahmeabschnitten versehen ist, in die die jeweiligen Führungsstifte (133) eingesetzt werden können, so dass die Geräuschsperrplatte (130) mit der Basis (110) gekoppelt werden kann.

2. Vorrichtung nach Anspruch 1, wobei das Geräuschsperrelement (120, 220, 320) so angeordnet ist, dass wenn die Vorrichtung mit der Bekleidungsbehandlungsvorrichtung kombiniert ist, es durch die Last des Gehäuses auf dem Boden zusammengedrückt wird.

3. Vorrichtung nach Anspruch 1 oder 2, wobei das Geräuschsperrelement (120, 220, 320) eine Dicke aufweist, die größer als ein Abstand zwischen der Basis (110) und dem Boden ist, wenn die Vorrichtung mit der Bekleidungsbehandlungsvorrichtung kombiniert ist.

4. Vorrichtung nach einem der Ansprüche 1 bis 3, wobei das Geräuschsperrelement (120, 220, 320) so angeordnet ist, dass es mit den Außenflächen der an der Basis (110) befestigten Füße (14) in Kontakt steht.

5. Vorrichtung nach einem der vorhergehenden Ansprüche, wobei das Geräuschsperrelement (120, 220, 320) zwei Elemente (121, 122) aus unterschiedlichen Materialien aufweist, die aufeinandergeschichtet sind.

6. Vorrichtung nach Anspruch 5, wobei die beiden Elemente (121, 122) aus unterschiedlichen Materialien aufweisen:
ein erstes Element (121), das aus einem Material besteht, das durch die Last des Gehäuses zusammendrückbar ist; und
ein zweites Element (122), das am ersten Element (121) befestigt ist und das zur Verhinderung eines Geräuschaustritts aus einem Material mit einer höheren Dichte als das erste Element (121) besteht.

7. Vorrichtung nach Anspruch 5 oder 6, wobei das erste Element (121) und das zweite Element (122) sich voneinander unterscheidende Dicken aufweisen.

8. Vorrichtung nach einem der Ansprüche 1 bis 7, wobei die Geräuschsperrplatte (130) mit Befestigungspolstern (131) versehen ist, die an deren Kanten vorgesehen sind, wobei die Befestigungspolster (131) zur Befestigung der Geräuschsperrplatte (130) an der Basis (110) ein Haftvermögen aufweisen.

9. Vorrichtung nach einem der Ansprüche 1 bis 8, wobei die Geräuschsperrplatte (130) mit mehreren daran ausgebildeten Schraubkopplungsabschnitte (132) versehen ist, so dass die Geräuschsperrplatte (130) durch Schrauben an der Basis (110) befestigt werden kann.

10. Vorrichtung nach einem der Ansprüche 1 bis 9, wobei die Geräuschsperrplatte (130) mit einem durch deren Mittelabschnitt ausgebildeten Abflussloch (134) versehen ist, um durch die Basis (110) abgelassene Flüssigkeit nach außen fließen zu lassen.

11. Vorrichtung nach Anspruch 10, wobei die Geräuschsperrplatte (130) mit Nuten (135) versehen ist, die an deren Oberfläche so ausgebildet sind, dass sie zur Basis (110) weisen, wobei sich die Nuten (135) zum Abflussloch (134) erstrecken, so dass durch die Basis (110) abgelassene Flüssigkeit zum Abflussloch (134) fließt.

12. Vorrichtung nach einem der Ansprüche 1 bis 11, wobei die Geräuschsperrplatte (130) mit mehreren Rippen (137a) zum Verstärken der Steifigkeit der Geräuschsperrplatte (130) versehen ist.

## Revendications

1. Machine à traiter le linge, comprenant un dispositif anti-fuite de bruit, ledit dispositif comprenant :
une base (110) prévue pour être disposée dans une partie inférieure d'une carrosserie (11) de la machine à traiter le linge, de manière à former une surface de fond de la machine à traiter le linge, où
ladite base (110) est prévue pour qu'y soient fixés des pieds (14) disposés symétriquement dans quatre coins de la base (110) pour supporter la carrosserie (11) ; et
un élément anti-bruit (120, 220, 320) disposé en dessous de la base (110) et s'étendant le long de sa périphérie de telle manière que, lorsque le dispositif anti-fuite de bruit est associé à la machine à traiter le linge, l'élément anti-bruit (120, 220, 320) est situé entre la base (110) et le plancher, empêchant ainsi un transfert vers l'extérieur, via la base (110), du bruit généré pendant le fonctionnement de la machine à traiter le linge ; **caractérisée en ce que** le dispositif comprend en outre
une plaque anti-bruit (130) de forme sensiblement rectangulaire, avec des parties de sommets en renfoncement pour être mises en place autour de surfaces extérieures des pieds (14) quand la base (110) et la plaque anti-bruit (13) sont associées à la machine à traiter le linge, les pieds (14) étant fixés sur la base (110),
où la plaque anti-bruit (130) est pourvue de broches de guidage (133) faisant saillie à sa surface en étant dirigées vers la base (110) quand la base (110) et la plaque anti-bruit (130) sont associées l'une à l'autre, et
où la base (110) est pourvue de parties de réception de broches de guidage où les broches de guidage (133) respectives peuvent être insérées, de manière à permettre l'accouplement de la plaque anti-bruit (130) avec la base (110).

2. Machine selon la revendication 1, où l'élément anti-bruit (120, 220, 320) est disposé de telle manière que, quand le dispositif est associé à la machine à traiter le linge, il est comprimé par la charge de la carrosserie sur le plancher.

3. Machine selon la revendication 1 ou la revendication 2, où l'élément anti-bruit (120, 220, 320) a une épaisseur supérieure à la distance entre la base (110) et le plancher quand le dispositif est associé à la machine à traiter le linge.

4. Machine selon l'une des revendications 1 à 3, où l'élément anti-bruit (120, 220, 320) est disposé de manière à être en contact avec les surfaces extérieures des pieds (14) fixés sur la base (110).

5. Machine selon l'une des revendications précédentes, où l'élément anti-bruit (120, 220, 320) comprend deux éléments (121, 122) en matériaux différents, empilés l'un sur l'autre.

6. Machine selon la revendication 5, où les deux éléments (121, 122) en matériaux différents comprennent :
un premier élément (121) constitué d'un matériau compressible par la charge de la carrosserie ; et
un deuxième élément (122) fixé au premier élément (121), constitué d'un matériau dont la densité est supérieure à celle du premier élément (121) pour empêcher une fuite de bruit.

7. Machine selon la revendication 5 ou la revendication 6, où le premier élément (121) et le deuxième élément (122) ont des épaisseurs différentes.

8. Machine selon l'une des revendications 1 à 7, où la plaque anti-bruit (130) est pourvue de patins de fixation (131) prévus sur des bords de celle-ci, lesdits patins de fixation (131) présentant un adhésivité permettant la fixation de la plaque anti-bruit (130) sur la base (110).

9. Machine selon l'une des revendications 1 à 8, où la plaque anti-bruit (130) est pourvue d'une pluralité de parties de raccordement par vissage (132) formées sur celle-ci, de manière à permettre la fixation de la plaque anti-bruit (130) sur la base (110) au moyen de vis.

10. Machine selon l'une des revendications 1 à 9, où la plaque anti-bruit (130) est pourvue d'un orifice de vidange (134) ménagé dans sa partie centrale, pour permettre l'écoulement vers l'extérieur du liquide évacué par la base (110).

11. Machine selon la revendication 10, où la plaque anti-bruit (130) est pourvue de rainures (135) formées à sa surface de manière à être opposées à la base (110), lesdites rainures (135) s'étendant vers l'orifice de vidange (134), de telle manière que le liquide évacué par la base (110) s'écoule vers l'orifice de vidange (134).

12. Machine selon l'une des revendications 1 à 11, où la plaque anti-bruit (130) est pourvue d'une pluralité de nervures (137a) pour renforcer la rigidité de la plaque anti-bruit (130).
